(19) **Europäisches Patentamt / European Patent Office / Office européen des brevets**

(11) **EP 2 550 448 B1**

(12) **FASCICULE DE BREVET EUROPEEN**

(45) Date de publication et mention
de la délivrance du brevet:
**05.04.2017 Bulletin 2017/14**

(21) Numéro de dépôt: **11712901.5**

(22) Date de dépôt: **15.02.2011**

(51) Int Cl.:
**F02N 11/08** *(2006.01)*

(86) Numéro de dépôt international:
**PCT/FR2011/050307**

(87) Numéro de publication internationale:
**WO 2011/117491 (29.09.2011 Gazette 2011/39)**

(54) **PROCÉDÉ ET DISPOSITIF DE COMMANDE D'UN DÉMARRAGE D'UN MOTEUR THERMIQUE**

VERFAHREN UND VORRICHTUNG ZUR STEUERUNG DES STARTS EINER WÄRMEKRAFTMASCHINE

METHOD AND DEVICE FOR CONTROLLING START-UP OF A HEAT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2010 FR 1052043**

(43) Date de publication de la demande:
**30.01.2013 Bulletin 2013/05**

(73) Titulaire: **Peugeot Citroën Automobiles SA
78140 Vélizy Villacoublay (FR)**

(72) Inventeur: **DUPE, Frédéric
F-92250 La Garenne Colombes (FR)**

(56) Documents cités:
**WO-A1-2006/111841        WO-A1-2008/110910
DE-A1-102008 004 223      FR-A1- 2 905 987**

**Description**

L'invention concerne un procédé et un dispositif de commande d'un démarrage d'un moteur thermique à combustion interne.

Des procédés connus comportent :

- la commande d'un démarrage assisté du moteur thermique dans lequel un moteur électrique entraîne en rotation l'arbre du moteur thermique, et en alternance,

- la commande d'un démarrage autonome du moteur thermique dans lequel on exploite uniquement la rotation résiduelle de l'arbre du moteur maintenu en rotation par son inertie depuis le dernier arrêt du moteur.

Le démarrage autonome est un démarrage sans recours à un moteur électrique du type démarreur ou alterno-démarreur pour entraîner l'arbre du moteur thermique en rotation. Il est rendu possible par le fait que l'arbre du moteur continue à tourner pendant quelques instants (par exemple quelques centaines de millisecondes) après la demande d'arrêt du moteur à cause de son inertie.

Le déposant connaît des procédés où le choix entre un démarrage assisté ou autonome est fait en fonction du régime moteur actuel, voir par exemple WO 2008/110910 A1. Le régime moteur est le nombre de tours par minute de l'arbre du moteur thermique.

Ensuite, le régime moteur est comparé à un seuil pour autoriser ou non le démarrage autonome du moteur thermique. Etant donné que le temps de réponse du moteur n'est pas instantané, ce seuil est surdimensionné. Cela conduit à réaliser des démarrages assistés dans des situations où un démarrage autonome aurait été possible. Cela accélère donc l'usure du moteur électrique utilisé pour entraîner l'arbre du moteur thermique.

L'invention vise à remédier à cet inconvénient en proposant un procédé de commande du démarrage d'un moteur thermique comportant :

- la prédiction du nombre de points morts hauts restant avant l'atteinte d'un régime moteur nul, et

- le choix entre la commande du démarrage assisté ou autonome en fonction du nombre prédit de points morts hauts.

Choisir entre les démarrages assistés et autonomes en fonction de la prédiction du nombre de points morts haut restants avant l'atteinte d'un régime moteur nul permet de commander plus finement le choix du redémarrage du moteur qu'une commande réalisé à partir du régime courant. Ainsi, on réduit le nombre de démarrages assistés inutiles et donc l'usure du moteur électrique utilisé lors de ces démarrages assistés. Pour rappel, le point mort haut correspond à la position du piston dans un cylindre où le volume de la chambre de combustion dans ce cylindre est le plus petit.

Les modes de réalisation de ce procédé peuvent comporter une ou plusieurs des caractéristiques suivantes :

- le choix est réalisé en comparant le nombre prédit de points morts hauts restant à un seuil prédéterminé;

- le seuil prédéterminé est fonction du système de combustion et du pilotage du moteur thermique ;

- le nombre prédit de points morts hauts restant avant l'atteinte d'un régime moteur nul est obtenu à l'aide de la relation suivante :

$$N_{PMH} = Partie\_entière\left(\frac{\pi \cdot J \cdot Ni^2 \cdot N_{cyl}}{7200 \cdot Ci}\right)$$

où:

- $N_{PMH}$ est le nombre prédit de points morts hauts restant avant l'atteinte d'un régime moteur nul,

- $J$ est l'inertie de l'arbre du moteur thermique,

- $Ci$ est le couple actuel de l'arbre du moteur (égal au couple de pertes dans la phase d'arrêt moteur),

- $N_i$ est le régime moteur mesuré au point mort haut, et

- $N_{cyl}$, est le nombre de cylindres du moteur.

L'invention a également pour objet un support d'enregistrement d'informations comportant des instructions pour la mise en oeuvre du procédé de commande ci-dessus, lorsque ces instructions sont exécutées par un calculateur électronique.

L'invention a également pour objet un dispositif de commande du démarrage d'un moteur thermique à combustion interne, ce dispositif comprenant une unité de commande apte :

- à commander un démarrage assisté du moteur thermique dans lequel un moteur électrique entraîne en rotation l'arbre du moteur thermique, et en alternance,

- à commander un démarrage autonome du moteur thermique dans lequel on exploite uniquement la rotation résiduelle de l'arbre du moteur maintenu en rotation par son inertie depuis la dernière demande d'arrêt du moteur,

- à prédire le nombre de points morts hauts restant avant l'atteinte d'un régime moteur nul, et

- à choisir entre la commande du démarrage assisté ou autonome en fonction de ce nombre prédit de points.

Enfin, l'invention a également pour objet un véhicule comportant le dispositif de commande ci-dessus.

L'invention sera mieux comprise à la lecture de la description qui va suivre donnée uniquement à titre d'exemple non limitatif et faite en se référant aux dessins sur lesquels :

- la figure 1 est une illustration schématique de l'architecture d'un véhicule équipé d'un dispositif de commande du démarrage d'un moteur thermique, et

- la figure 2 est un organigramme d'un procédé de commande du démarrage du moteur thermique du véhicule de la figure 1.

Dans la suite de cette description, les caractéristiques et fonctions bien connues de l'homme du métier ne sont pas décrites en détail.

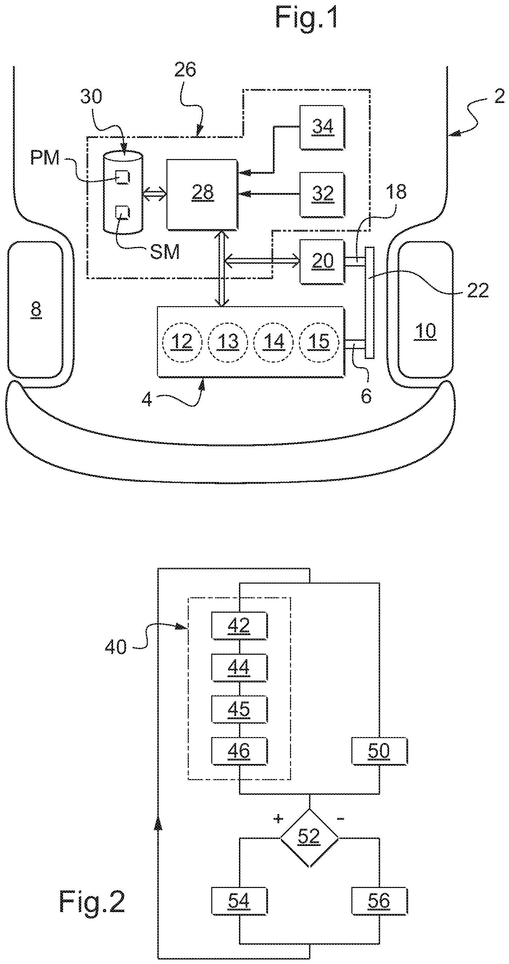

La figure 1 représente partiellement en vue de dessus la partie avant d'un véhicule 2. Par exemple, le véhicule 2 est un véhicule automobile tel qu'une voiture. Ce véhicule 2 est équipé d'un moteur thermique 4 à combustion interne. Ce moteur 4 est équipé d'un arbre 6 qui entraîne en rotation des roues motrices 8, 10 du véhicule 2.

Typiquement, le moteur 4 est un moteur à quatre temps équipé de quatre cylindres 12 à 15. Dans un tel moteur, l'arbre 6 fait deux tours pour réaliser un cycle complet d'un piston à l'intérieur du cylindre. L'arbre 6 présente une inertie notée J et considérée comme constante. Sous l'effet de cette inertie, l'arbre 6 peut continuer à tourner pendant plusieurs centaines de millisecondes après la demande d'arrêt du moteur 4.

L'arbre 6 est mécaniquement raccordé à un arbre 18 d'un moteur électrique 20 par l'intermédiaire d'une courroie d'entraînement 22. Le moteur 20 est conçu pour entraîner en rotation l'arbre 6 afin de permettre le démarrage du moteur 4. Typiquement, le moteur 20 est un démarreur ou un alterno-démarreur. Lorsque le moteur 20 est utilisé pour le démarrage du moteur 4 on parle alors de démarrage assisté.

Le véhicule 2 comprend également un dispositif 26 de commande du démarrage du moteur 4. Ce dispositif 26 est équipé d'une unité 28 de commande du démarrage du moteur 4. Par exemple, cette unité 28 est réalisée à partir d'un ou plusieurs calculateurs électroniques programmables aptes à exécuter des instructions enregistrées sur un support d'enregistrement d'informations. A cet effet, l'unité 28 est raccordée à une mémoire 30 contenant les instructions nécessaires pour exécuter, entre autres, le procédé de la figure 2.

En particulier, la mémoire 30 comprend une cartographie PM et un seuil S1. La cartographie PM associe à chaque régime Ni du moteur 4 un couple Ci de perte. Ce couple de perte correspond au couple exercé sur l'arbre 6 par l'ensemble des forces qui freinent la rotation de cet arbre. Typiquement, il s'agit essentiellement de forces de frottement et de couples résistifs exercés par différents accessoires entraînés en rotation par l'arbre 6. Par exemple, l'accessoire est un alternateur, un moteur d'une climatisation ou autre.

Cette cartographie PM est par exemple construite expérimentalement. A cet effet, pour différents régimes $N_i$ du moteur, le couple *Ci de* ce moteur est mesuré.

Le seuil S1 correspond à un nombre de points morts hauts restant avant que le régime moteur soit nul au-delà duquel un démarrage autonome du moteur 4 est possible. Ce seuil est associé au système de combustion et de pilotage du moteur (moteur injection directe ou indirecte, gestion des interruptions pour l'injection,....).

Ce seuil S1 est fixe pour le moteur considéré.

L'unité 28 pilote le démarrage du moteur 4 selon la procédure connue sous l'expression anglaise de « stop and start ». Ce pilotage du moteur 4 consiste à arrêter automatiquement le moteur 4 lorsque le véhicule est à l'arrêt et à commander automatiquement le démarrage du moteur 4 quand le conducteur souhaite avancer. Les conditions d'arrêt et de démarrage automatiques du moteur sont déterminées à partir de différentes grandeurs physiques mesurées sur le véhicule 2 tels que sa vitesse, l'enfoncement de la pédale d'accélération, l'enclenchement d'un rapport de u autres.

L'unité 28 est capable aussi bien de commander un démarrage autonome du moteur 4 qu'un démarrage assisté du moteur 4. Pour choisir entre ces deux modes de démarrage, elle met en oeuvre le procédé de la figure 2. Pour mettre en oeuvre le procédé de la figure 2, l'unité 28 est raccordée à un capteur 32 du régime moteur actuel $N_i$ à chaque point mort haut et à un capteur 34 de la température du moteur 4. Par exemple, le capteur 34 mesure la température de l'eau de refroidissement du moteur 4.

Le fonctionnement du dispositif 26 va maintenant être décrit plus en détail en regard du procédé de la figure 2.

Après avoir commander l'arrêt du moteur 4, l'unité 28 procède à chaque point mort haut à une étape 40 de prédiction du nombre de points morts hauts restants avant l'atteinte d'un régime moteur nul. Ce nombre prédit de points morts hauts avant l'atteinte d'un régime moteur nul est noté $N_{PMH}$.

A cet effet, lors d'une opération 42, le régime moteur $N_i$ est mesuré par le capteur 32 au point mort haut.

Ensuite, lors d'une opération 44, le couple $C_i$ du moteur 4 est calculé. Lorsque le moteur est à l'arrêt et que l'arbre 6 continue à tourner sur sa lancée, le couple $C_i$ actuel est égal au couple des pertes. Ce couple $C_i$ est donc calculé en utilisant la cartographie PM et la valeur du régime $N_i$ mesurée lors de l'opération précédente.

Dans la suite de ce procédé, on considère que ce couple $Ci$ est constant à partir de l'instant $i$ où on mesure le régime moteur jusqu'à l'instant où le régime moteur s'annule. Avec cette hypothèse, lors d'une opération 45, on estime la durée nécessaire à l'atteinte du régime moteur nul lorsque le régime moteur mesuré au point mort haut est $N_i$. L'estimation est construite à partir de l'équation de la dynamique suivante :

$$Ci = J \cdot \frac{dwi}{dt} \qquad \text{(Equation 1)}$$

où :

- $Ci$ est le couple de pertes

- $J$ est l'inertie de l'arbre du moteur,

- $wi$ est la vitesse de rotation du moteur exprimée en radian par seconde obtenue à partir du régime moteur $N_i$ mesuré lors de l'opération 42.

On peut alors estimer, l'intervalle $\varDelta Ti$ de temps avant que le régime moteur s'annule à partir de la relation suivante :

$$\Delta Ti = (wi - 0) \cdot \frac{J}{Ci}$$

En intégrant deux fois, lors d'une étape 46, l'équation de la dynamique (Equation 1) et en utilisant l'intervalle $\varDelta Ti$ nécessaire pour atteindre le régime moteur nul, on peut calculer la distance angulaire $R_i$ parcourue par l'arbre moteur depuis l'instant où le régime $N_i$ a été mesuré jusqu'à l'instant où le régime moteur est nul.

$$Ri = \frac{1}{2} \cdot \frac{J}{Ci} \cdot wi^2$$

On connaît la distance angulaire R parcourue par l'arbre 6 entre deux points morts haut successifs. Cette distance R est donnée par la relation suivante :

$$R = \frac{2 \cdot 2 \cdot \pi}{N_{cyl}}$$

où :

N$_{cyl}$ est le nombre de cylindres du moteur 4 c'est-à-dire dans le cas ici représenté quatre, et

« 2 » est fixé par le nombre de tours de l'arbre 6 pour faire un cycle complet.

Finalement, lors de l'étape 46, le nombre $N_{PMH}$ est prédit à l'aide de la relation suivante :

$$N_{PMH} = \frac{Ri}{R} = Partie\_entière\left(\frac{J \cdot wi^2}{2} \cdot \frac{N_{cyl}}{2 \cdot 2 \cdot \pi}\right) = Partie\_entière\left(\frac{\pi \cdot J \cdot Ni^2 \cdot N_{cyl}}{7200 \cdot Ci}\right)$$

La partie entière de ce calcul correspond à l'estimation du nombre de points morts haut restants avant l'atteinte du régime nul. La vitesse angulaire $wi$ exprimé en radian par seconde contenu dans la relation ci-dessus est convertie en tours par minute $N_i$.

En parallèle de l'étape 40, lors d'une étape 50, l'unité 28 calcule également la valeur du seuil S1.

Lors d'une étape 52, le nombre prédit NPMH est comparé à la valeur du seuil S1. Si le nombre prédit N$_{PMH}$ dépasse ou égale la valeur du seuil S1, alors on procède, lors d'une étape 54, à la commande du démarrage autonome du moteur 4. Plus précisément, lors de l'étape 54, on commande l'injection de carburant et de comburant dans les cylindres du moteur 4 puis l'explosion de ce mélange de carburant et de comburant au moment où le piston atteint le point mort haut. Lors de l'étape 54 l'arbre 6 n'est pas entraîné en rotation par un moteur électrique.

Dans le cas contraire, c'est-à-dire si le nombre prédit $N_{PMH}$ est inférieur au seuil S1 alors, lors d'une étape 56, l'unité 28 commande le démarrage assisté du moteur 4. Pour cela, l'unité 28 commande le moteur 20 pour entraîner en rotation l'arbre 6 puis, l'unité 28 commande l'injection de carburant et de comburant dans les cylindres et leur explosion au moment où le point mort haut est atteint de manière à entraîner en rotation l'arbre 6. Quand le régime moteur atteint est supérieur à un seuil S2 déterminé par l'utilisateur, le moteur électrique 20 est arrêté et seul le moteur thermique 4 est utilisé pour entraîner en rotation l'arbre 6.

A l'issu des étapes 54 ou 56, le procédé retourne aux étapes 40 et 50 qui seront de nouveaux exécutées lors d'un prochain démarrage du moteur 4.

D'autres moteurs qu'un moteur à quatre temps et à quatre cylindres peuvent être commandés par le dispositif 26. Par exemple, le nombre de cylindres peut être différents ou le nombre de tours par cycle peut être différents. Dans ces cas, les différentes relations données dans le cas particulier d'un moteur à quatre temps et à quatre cylindres sont adaptés à cette nouvelle configuration du moteur 4.

Le couple $Ci$ peut être mesuré plutôt qu'estimé à partir du régime moteur mesuré.

## Revendications

1. Procédé de commande du démarrage d'un moteur thermique à combustion interne, ce procédé comportant :

    - la commande d'un démarrage (56) assisté du moteur (4) thermique dans lequel un moteur (20) électrique entraîne en rotation l'arbre (6) du moteur (4) thermique, et en alternance,
    - la commande d'un démarrage autonome (54) du moteur (4) thermique dans lequel on exploite uniquement la rotation résiduelle de l'arbre (6) du moteur (4) maintenu en rotation par son inertie depuis le dernier arrêt du moteur (4),
    **caractérisé en ce que** le procédé comporte :

        - la prédiction (46) du nombre de points morts hauts restant avant l'atteinte d'un régime moteur nul, et
        - le choix (52) entre la commande du démarrage assisté (56) ou autonome (54) en fonction de ce nombre prédit de points.

2. Procédé selon la revendication 1, dans lequel le choix est réalisé en comparant le nombre prédit de points morts hauts restant à un seuil prédéterminé.

3. Procédé selon la revendication 2, dans lequel le seuil prédéterminé est fonction du système de combustion et de pilotage du moteur (4) thermique.

4. Procédé selon l'une quelconque des revendications précédentes, dans lequel le nombre prédit de points morts hauts restant avant l'atteinte d'un régime moteur nul est obtenu à l'aide de la relation suivante :

$$N_{PMH} = Partie\_entière \left( \frac{\pi \cdot J \cdot Ni^2 \cdot N_{cyl}}{7200 \cdot Ci} \right)$$

où $N_{PMH}$ est le nombre prédit de points morts hauts restant avant l'atteinte d'un régime moteur nul, $J$ est l'inertie de l'arbre (6) du moteur (4) thermique, $C_i$ est le couple actuel de l'arbre (6) du moteur (4) égal au couple de pertes dans la phase d'arrêt moteur, $N_i$ est le régime moteur mesuré au point mort haut, et $N_{cyl}$ est le nombre de cylindres (12 à 15) du moteur (4).

5. Support (30) d'enregistrement d'informations, **caractérisé en ce qu'**il comporte des instructions pour l'exécution d'un procédé de commande conforme à l'une quelconque des revendications précédentes, lorsque ces instructions sont exécutées par un calculateur électronique.

6. Dispositif de commande du démarrage d'un moteur thermique à combustion interne, ce dispositif comprenant une unité de commande apte :

- à commander un démarrage assisté (56) du moteur thermique dans lequel un moteur (20) électrique entraîne en rotation l'arbre (6) du moteur (4) thermique, et en alternance,
- à commander un démarrage autonome du moteur (4) thermique dans lequel on exploite uniquement la rotation résiduelle de l'arbre (6) du moteur (4) maintenu en rotation par son inertie depuis la dernière demande d'arrêt du moteur (4),
**caractérisé en ce que** l'unité de commande (28) est également apte :

- à prédire (46) le nombre de points morts hauts restant avant l'atteinte d'un régime moteur nul, et
- à choisir (52) entre la commande du démarrage assisté (56) ou autonome (54) en fonction de ce nombre prédit de points.

7. Véhicule, **caractérisé en ce qu'**il comporte un dispositif de commande de démarrage d'un moteur (4) thermique conforme à la revendication 6.

**Patentansprüche**

1. Verfahren zur Steuerung des Starts eines Innenbverbrennungsmotors, wobei dieses Verfahren Folgendes umfasst:

- die Steuerung eines unterstützten Starts (56) des Verbrennungsmotors (4), wobei ein Elektromotor (20) die Welle (6) des Verbrennungsmotors (4) in Drehung versetzt, und abwechselnd,
- die Steuerung eines autonomen Starts (54) des Verbrennungsmotors (4), wobei man nur die Restdrehung der Welle (6) des Motors (4) nutzt, die durch ihre Trägheit seit dem letzten Halt des Motors (4) in Drehung gehalten wird,
**dadurch gekennzeichnet, dass** das Verfahren Folgendes umfasst:

- die Vorhersage (46) der Anzahl an verbleibenden oberen Totpunkten vor dem Erreichen einer Motordrehzahl gleich Null, und
- die Wahl (52) zwischen der Steuerung des unterstützten (56) oder autonomen (54) Starts in Abhängigkeit von dieser vorhergesagten Anzahl an Punkten.

2. Verfahren nach Anspruch 1, wobei die Wahl getroffen wird, indem man die vorhergesagte Anzahl an verbleibenden oberen Totpunkten mit einem vorbestimmten Grenzwert vergleicht.

3. Verfahren nach Anspruch 2, wobei der vorbestimmte Grenzwert vom Verbrennungssystem und der Steuerung des Verbrennungsmotors (4) abhängt.

4. Verfahren nach irgendeinem der vorhergehenden Ansprüche, wobei man die vorhergesagte Anzahl an verbleibenden oberen Totpunkten vor dem Erreichen einer Motordrehzahl gleich Null mithilfe der folgenden Gleichung erhält:

$$N_{PMH} = ganzzahliger\_Teil \left( \frac{\pi * J * Ni^2 * N_{cyl}}{7200 * Ci} \right)$$

wobei $N_{PMH}$ die vohergesagte Anzahl an verbleibenden oberen Totpunkten vor dem Erreichen einer Motordrehzahl gleich Null ist, $J$ die Trägheit der Welle (6) des Verbrennungsmotors (4) ist, $Ci$ das aktuelle Drehmoment der Welle (6) des Motors (4) gleich dem Verlustdrehmoment in der Haltephase des Motors ist, $N_i$ die gemessene Motordrehzahl am oberen Totpunkt ist, und $N_{cyl}$ die Anzahl der Zylinder (12 bis 15) des Motors (4) ist.

5. Medium (30) zum Speichern von Informationen, **dadurch gekennzeichnet, dass** es Befehle zur Ausführung eines Verfahrens zur Steuerung nach irgendeinem der vorhergehenden Ansprüche umfasst, wenn diese Befehle durch einen elektronischen Rehchner ausgeführt werden.

6. Vorrichtung zum Steuern des Starts eines Innenverbrennungsmotors, wobei diese Vorrichtung eine Steuereinheit umfasst, die imstande ist:

- einen unterstützten Start (56) des Verbrennungsmotors zu steuern, wobei ein Elektromotor (20) die Welle (6) des Verbrennungsmotors (4) in Drehung versetzt, und abwechselnd
- einen autonomen Start des Verbrennungsmotors (4) zu steuern, wobei man nur die Restdrehung der Welle (6) des Motors (4) nutzt, die durch ihre Trägheit seit dem letzten Halteanforderung des Motors (4) in Drehung gehalten wird,
**dadurch gekennzeichnet, dass** die Steuereinheit (28) ebenfalls imstande ist:

- die Anzahl an verbleibenden oberen Totpunkten vor dem Erreichen einer Motordrehzahl gleich Null vorherzusagen (46), und
- zwischen der Steuerung des unterstützten (56) oder autonomen (54) Starts in Abhängigkeit von dieser vorhergesagten Anzahl an Punkten zu wählen (52).

7. Fahrzeug, **dadurch gekennzeichnet, dass** es eine Vorrichtung zum Steuern des Starts eines Verbrennungsmotors (4) nach Anspruch 6 umfasst.

**Claims**

1. Method for controlling the starting of an internal combustion heat engine, this method comprising :

- the control of assisted starting (56) of the heat engine (4), wherein an electric motor (20) rotates the shaft (6) of the heat engine (4), and in alternation,
- the control of independent starting (54) of the heat engine (4), wherein only the residual rotation of the shaft (6) of the engine (4), maintained in rotation by the inertia of said shaft since the last stoppage of the engine (4), is used,
- **characterised in that** the method comprises:

- the prediction (46) of the number of top dead centres remaining before reaching a zero engine speed, and
- the choice (52) between controlling the assisted (56) or independent (54) starting according to this predicted number of centres.

2. Method according to claim 1, wherein the choice is carried out by comparing the predicted number of top dead centres remaining to a predetermined threshold.

3. Method according to claim 2, wherein the predetermined threshold is dependent on the combustion and control system of the heat engine (4).

4. Method according to one of the previous claims, wherein the predicted number of top dead centres remaining before reaching a zero engine speed is obtained via the following relation:

$$N_{PMH} = integral\_Part\left(\frac{\pi * J * Ni^2 * N_{cyl}}{7200 * Ci}\right)$$

where $N_{PMH}$ is the predicted number of top dead centres remaining before reaching a zero engine speed, $J$ is the inertia of the shaft (6) of the heat engine (4), $Ci$ is the current torque of the shaft (6) of the engine (4) equal to the torque losses in the stopped phase of the engine, $N_i$ is the engine speed measured at top dead centre, and $N_{cyl}$ is the number of cylinders (12 to 15) of the engine (4).

5. Medium (30) for recording information, **characterised in that** said medium comprises instructions for executing a control method according to any of the previous claims, when these instructions are executed by an electronic computer.

6. Device for controlling the starting of an internal combustion heat engine, this device comprising a control unit suitable:

- for controlling assisted starting (56) of the heat engine, wherein an electric motor (20) rotates the shaft (6) of the heat engine (4), and in alternation,
- for controlling independent starting of the heat engine (4), wherein only the residual rotation of the shaft (6) of the engine (4), maintained in rotation by the inertia of said shaft since the last stoppage of the engine (4), is used, **characterised in that** the control unit (28) is also suitable:

- for predicting (46) the number of top dead centres remaining before reaching a zero engine speed, and
- for choosing (52) between controlling the assisted (56) or independent (54) starting according to this predicted number of centres.

7. Vehicle **characterised in that** said vehicle comprises a device for controlling the starting of a heat engine (4) according to claim 6.

# Fig.1

# Fig.2

**EP 2 550 448 B1**

## RÉFÉRENCES CITÉES DANS LA DESCRIPTION

**Documents brevets cités dans la description**

- WO 2008110910 A1